# EUROPEAN PATENT APPLICATION

(11) **EP 3 992 839 A1**
(43) Date of publication of application: **04.05.2022**
(21) Application number: 21162727.8
(22) Date of filing: 16.03.2021
(51) Int. Cl.: G06K 7/10

(54) **PORTABLE RFID READER DEVICE INCLUDING CROSS YAGI ANTENNA**

(30) Priority: 28.10.2020 KR 20200141588
(71) Applicant: Apulse Technology Co., Ltd., Gyeonggi-do 14322 (KR)
(72) Inventor: KIM, Nam Joong, 15622 Gyeonggi-do (KR)
(74) Representative: Isarpatent

(57) **Abstract**

A portable RFID reader device includes a cross Yagi antenna having good signal reading characteristics regardless of the position of an RFID tag in order to obviate shortcomings related to the signal reading characteristics of a linear or circular polarization antenna. In embodiments, a portable RFID reader device may include a reader body implemented as a portable type having a handle, and communicating with an RFID tag in a non-contact manner, and a cross Yagi antenna assembly connected to the reader body, and including a cross Yagi antenna transmitting and receiving an RF signal required for communication to and from the RFID tag in a non-contact manner. The cross Yagi antenna may include a plate-shaped first Yagi antenna disposed at an angle of -45 degrees with respect to a horizontal plane, and a second Yagi antenna disposed at an angle of 45 degrees with respect to the horizontal plane and arranged orthogonally and cross-coupled to the first Yagi antenna.

## Description

### TECHNICAL FIELD

The present disclosure generally relates to a portable RFID reader device. Particularly, the present disclosure relates to a portable RFID reader device including a cross Yagi antenna having good signal reading characteristics regardless of the position of an RFID tag.

### BACKGROUND

A radio frequency identification (RFID) tag, which is a kind of an electronic tag, is capable of transmitting recorded information wirelessly through radio waves. An RFID reader device is capable of receiving such information from the RFID tag. The RFID reader device can interpret the received information and acquire unique information of an object to which the RFID tag is attached.

Thus, having the ability of reading information recorded in the RFID tag in a non-contact manner, the RFID reader device can be used for recognizing, tracking, and managing a great variety of objects such as articles, animals, and people to which the RFID tags are attached.

The RFID reader device has an antenna to receive a radio signal from the RFID tag. In particular, a portable RFID reader device that performs reading in the ultra-high frequency (UHF) band mainly uses a linear polarization antenna or a circular polarization antenna.

The RFID reader device using the linear polarization antenna has isolation of zero between the horizontal polarization and the vertical polarization. Therefore, the signal reading characteristics are maximized when the RFID reader device is parallel to the RFID tag, and are, on the contrary, minimized when the RFID reader device is orthogonal to the RFID tag. That is, the signal reading characteristics are significantly varied depending on the relative position between the RFID reader device and the RFID tag.

On the other hand, the RFID reader device using the circular polarization antenna has isolation of 0.5 (-3 dB) between the horizontal polarization and the vertical polarization. Therefore, there is little difference in the signal reading characteristics depending on the relative position between the RFID reader device and the RFID tag. However, because a loss of 3 dB occurs according to the polarization characteristics of the RFID tag antenna and the RFID reader device antenna, the signal reading characteristics are deteriorated when compared to a case of using the linear polarization antenna having the same gain.

### SUMMARY

Accordingly, the present disclosure provides a portable RFID reader device that includes a cross Yagi antenna having good signal reading characteristics regardless of the position of an RFID tag in order to obviate the above-described shortcomings related to the signal reading characteristics of the linear or circular polarization antenna.

According to the present disclosure, a portable radio frequency identification (RFID) reader device may include a reader body implemented as a portable type having a handle, and communicating with an RFID tag in a non-contact manner; and a cross Yagi antenna assembly connected to the reader body, and including a cross Yagi antenna transmitting and receiving an RF signal required for communication to and from the RFID tag in a non-contact manner. In the portable RFID reader device, the cross Yagi antenna may include a plate-shaped first Yagi antenna disposed at an angle of -45 degrees with respect to a horizontal plane; and a second Yagi antenna disposed at an angle of 45 degrees with respect to the horizontal plane and arranged orthogonally and cross-coupled to the first Yagi antenna.

In the portable RFID reader device, the cross Yagi antenna may further include a base substrate on which the first and second Yagi antennas are mounted.

In the portable RFID reader device, the cross Yagi antenna assembly may further include an antenna case that accommodates the cross Yagi antenna, and the antenna case may include a first antenna case supporting the base substrate inserted therein; and a second antenna case combined with the first antenna case, wherein the first and second Yagi antennas mounted on the base substrate are positioned in the second antenna case.

In the portable RFID reader device, the first Yagi antenna may include a first printed circuit board (PCB) having a first front surface and a first rear surface opposite to the first front surface; a first front antenna pattern formed on the first front surface; a first rear antenna pattern formed on the first rear surface; and a first slot formed to a predetermined depth downward from an upper central portion of the first PCB.

In the portable RFID reader device, the second Yagi antenna may include a second PCB having a second front surface and a second rear surface opposite to the second front surface; a second front antenna pattern formed on the second front surface; a second rear antenna pattern formed on the second rear surface; and a second slot formed to a predetermined depth upward from a lower central portion of the second PCB.

In the portable RFID reader device, the second slot of the second Yagi antenna may be inserted into the first slot of the first Yagi antenna, so that the first Yagi antenna and the second Yagi antenna are cross-coupled to each other.

In the portable RFID reader device, the first and second Yagi antennas may transmit and receive RF signals with a time difference through the first and second ports respectively connected thereto through the base substrate.

In the portable RFID reader device, the first port may include a first central conductor axis connected to the first front antenna pattern through the base substrate; and a first ground plane connected to the first rear antenna pattern through the base substrate.

In the portable RFID reader device, the first front antenna pattern may include a first front vertical line formed in a vertical direction from a lower central portion of the first PCB; and a first front radiation line extended from an upper end of the first front vertical line and forming a certain pattern. In addition, the first rear antenna pattern may include a first rear vertical line formed in a vertical direction from the lower central portion of the first PCB; and a first rear radiation line extended from an upper end of the first rear vertical line and forming a certain pattern. In addition, the first front and rear vertical lines may be overlapped with each other while being formed respectively on the first front and rear surfaces with the first PCB interposed therebetween. In addition, the first front and rear radiation lines may be formed in opposite directions to each other while being extended respectively from the first front and rear vertical lines. In addition, the first front vertical line may be electrically connected to the first central conductor axis of the first port, and the first rear vertical line may be electrically connected to the first ground plane of the first port.

In the portable RFID reader device, the second port may include a second central conductor axis connected to the second front antenna pattern through the base substrate; and a second ground plane connected to the second rear antenna pattern through the base substrate.

In the portable RFID reader device, the second front antenna pattern may include a second front vertical line formed in a vertical direction from a lower central portion of the second PCB; and a second front radiation line extended from an upper end of the second front vertical line and forming a certain pattern. In addition, the second rear antenna pattern may include a second rear vertical line formed in a vertical direction from the lower central portion of the second PCB; and a second rear radiation line extended from an upper end of the second rear vertical line and forming a certain pattern. In addition, the second front and rear vertical lines may be overlapped with each other while being formed respectively on the second front and rear surfaces with the second PCB interposed therebetween. In addition, the second front and rear radiation lines may be formed in opposite directions to each other while being extended respectively from the second front and rear vertical lines. In addition, the second front vertical line may be electrically connected to the second central conductor axis of the second port, and the second rear vertical line may be electrically connected to the second ground plane of the second port.

According to the present disclosure, the portable RFID reader device may include the cross Yagi antenna composed of the first and second Yagi antennas disposed respectively at angles of ±45 degrees with respect to the horizontal plane, thus exhibiting good signal reading characteristics regardless of a relative positional relationship between the portable RFID reader device and the RFID tag.

In addition, the cross Yagi antenna according to the present disclosure has a structure in which the first and second Yagi antennas having the same shape are orthogonally coupled to and overlapped with each other at angles of ±45 degrees with respect to the horizontal plane, so that even if two antennas are used, the occupied size thereof is minimized.

In addition, the cross Yagi antenna according to the present disclosure outputs RF signals for reading the RFID tag with a time difference of several tens of milliseconds through the first and second ports respectively connected to the first and second Yagi antennas, thereby exhibiting good signal reading characteristics even at any angle, that is, in any relative positional relationship including parallel or orthogonal, between the RFID reader device and the RFID tag.

### BRIEF DESCRIPTION OF THE DRAWINGS

FIG. 1 is a block diagram illustrating a portable RFID reader device including a cross Yagi antenna according to an embodiment.
FIG. 2 is an exploded perspective view illustrating a cross Yagi antenna assembly for a portable RFID reader device according to an embodiment.
FIG. 3 is a combined perspective view illustrating the cross Yagi antenna assembly of FIG. 2.
FIG. 4 is a perspective view illustrating the cross Yagi antenna of FIG. 2.
FIG. 5 is a plan view illustrating the base substrate of the cross Yagi antenna of FIG. 4.
FIG. 6 is a plan view illustrating the first Yagi antenna of the cross Yagi antenna of FIG. 4.
FIG. 7 is a plan view illustrating the second Yagi antenna of the cross Yagi antenna of FIG. 4.

### DETAILED DESCRIPTION

Hereinafter, embodiments of the present disclosure will be described in detail with reference to the accompanying drawings. The present disclosure may, however, be embodied in many different forms and should not be construed as being limited to the embodiments set forth herein. Rather, these embodiments are provided so that the disclosure will be thorough and complete and will fully convey the scope of the disclosure to those skilled in the art.

In the following description of embodiments, techniques that are well known in the art and not directly related to the present disclosure are not described. This is to clearly convey the subject matter of the present disclosure by omitting an unnecessary explanation. For the same reason, some elements in the drawings are exaggerated, omitted, or schematically illustrated. Also, the size of each element does not entirely reflect the actual size. In the disclosure, the same or corresponding elements are denoted by the same reference numerals.

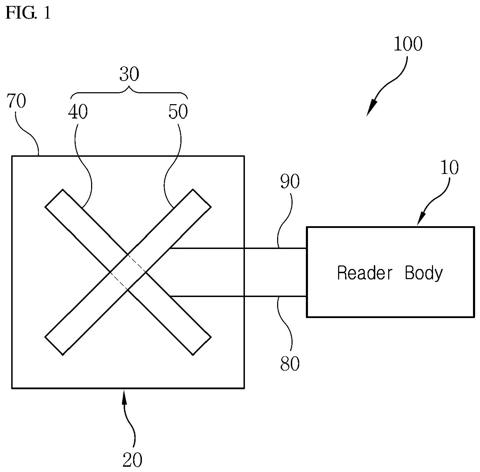

FIG. 1 is a block diagram illustrating a portable RFID reader device including a cross Yagi antenna according to an embodiment.

Referring to FIG. 1, the portable RFID reader device 100 includes a reader body 10 and a cross Yagi antenna assembly 20. The reader body 10 is implemented as a portable type having a handle and communicates with an RFID tag (not shown) in a non-contact manner. The cross Yagi antenna assembly 20 is connected to the reader body 10, and transmits and receives an RF signal required for communication to and from the RFID tag in a non-contact manner.

The reader body 10 communicates with the RFID tag through a cross Yagi antenna 30 installed in the cross Yagi antenna assembly 20. The reader body 10 is capable of reading the RFID tag to retrieve information recorded in the RFID tag. The reader body 10 may store and display the retrieved information of the RFID tag so that a user can perceive the information. The reader body 10 may provide necessary information to the RFID tag to update information recorded in the RFID tag.

In addition, the reader body 10 is implemented as a portable or handheld type to allow the user to hold it by hand. For example, the reader body 10 may be implemented as a gun type.

The cross Yagi antenna assembly 20 includes the cross Yagi antenna 30 and an antenna case 70 that accommodates the cross Yagi antenna 30.

The cross Yagi antenna 30 includes a plate-shaped first Yagi antenna 40 and a plate-shaped second Yagi antenna 50 that are cross-coupled to each other. For example, the first Yagi antenna 40 is disposed at an angle of -45 degrees with respect to the horizontal plane, whereas the second Yagi antenna 50 is disposed at an angle of 45 degrees with respect to the horizontal plane and is thus arranged orthogonally and cross-coupled to the first Yagi antenna 40.

The first and second Yagi antennas 40 and 50 are electrically connected to the reader body 10 via first and second ports 80 and 90, respectively, to transmit and receive RF signals through the first and second ports 80 and 90. The first and second Yagi antennas 40 and 50 arranged orthogonally to each other in the direction of ±45 degrees transmit and receive RF signals with a time difference of several tens of milliseconds (ms) through the first and second ports 80 and 90, thereby exhibiting good signal reading characteristics even at any angle (i.e., in any relative positional relationship including parallel or orthogonal) between the RFID reader device 100 and the RFID tag.

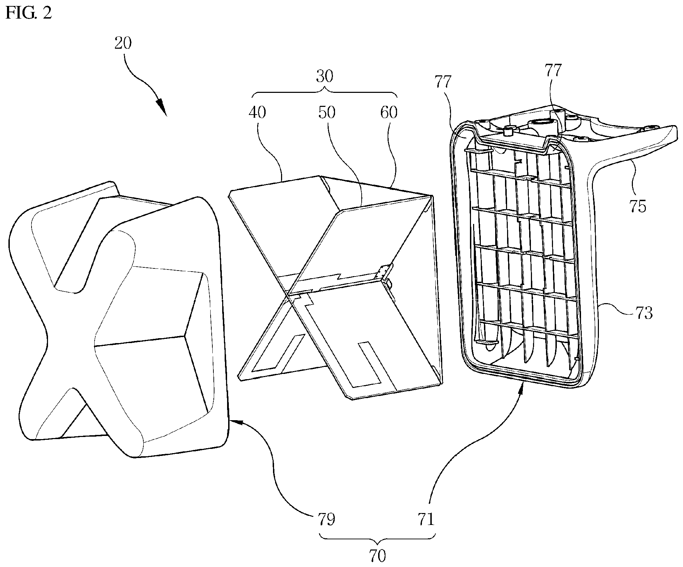

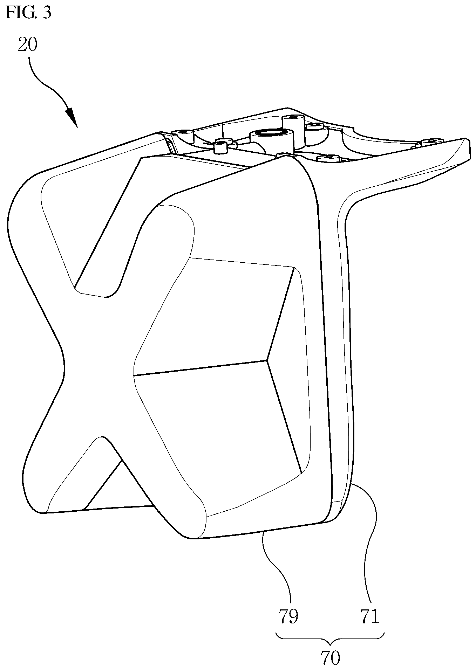

Hereinafter, the cross Yagi antenna assembly 20 for the portable RFID reader device 100 will be described in more detail with reference to FIGS. 1 to 3. FIG. 2 is an exploded perspective view illustrating a cross Yagi antenna assembly 20 for a portable RFID reader device according to an embodiment. FIG. 3 is a combined perspective view illustrating the cross Yagi antenna assembly 20 of FIG. 2.

As described above, the cross Yagi antenna assembly 20 includes the cross Yagi antenna 30 and the antenna case 70 that accommodates the cross Yagi antenna 30.

The cross Yagi antenna 30 includes the first and second Yagi antennas 40 and 50 as described above, and may further include a base substrate 60. The first and second Yagi antennas 40 and 50 are cross-coupled to each other and mounted on the base substrate 60.

The base substrate 60 is a support plate on which the first and second Yagi antennas 40 and 50 are mounted. The first and second ports 80 and 90 are electrically connected to the first and second Yagi antennas 40 and 50, respectively, through the base substrate 60.

The antenna case 70 includes a first antenna case 71 and a second antenna case 79. The first antenna case 71 supports the base substrate 60 inserted therein. The second antenna case 79 is combined with the first antenna case 71, and the first and second Yagi antennas 40 and 50 mounted on the base substrate 60 are positioned in the second antenna case 79.

The first antenna case 71 includes a substrate insertion portion 73 into which the base substrate 60 is inserted, and a connection portion 75 extended from the substrate insertion portion 73 and connected to the reader body 10. The connection portion 75 has passages 77 for the first and second ports 80 and 90 connected respectively from the first and second Yagi antennas 40 and 50 to the reader body 10.

The second antenna case 79 has an inner space into which the first and second Yagi antennas 40 and 50 are inserted and placed. For example, the second antenna case 79 may be implemented to have a cross-shaped inner space and outer appearance corresponding to the shape of the cross-coupled first and second Yagi antennas 40 and 50.

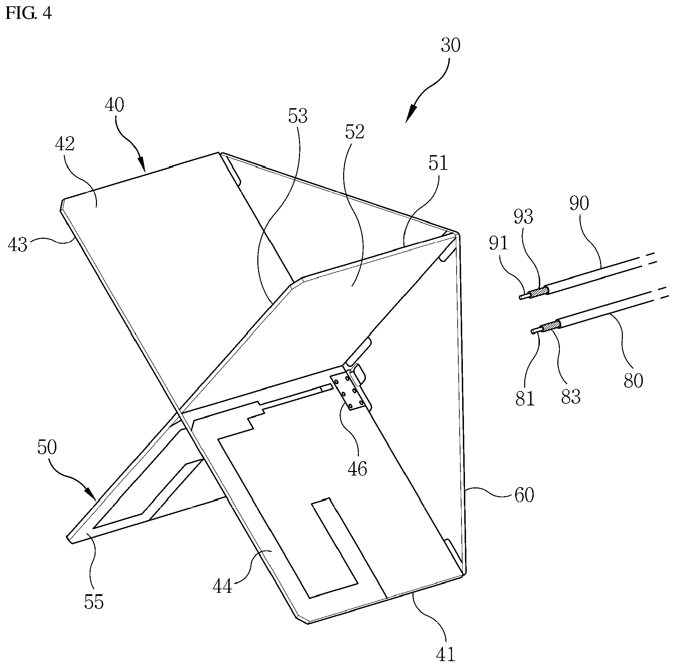

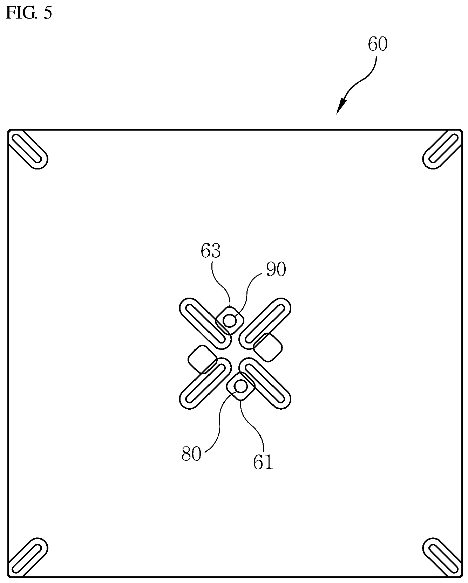

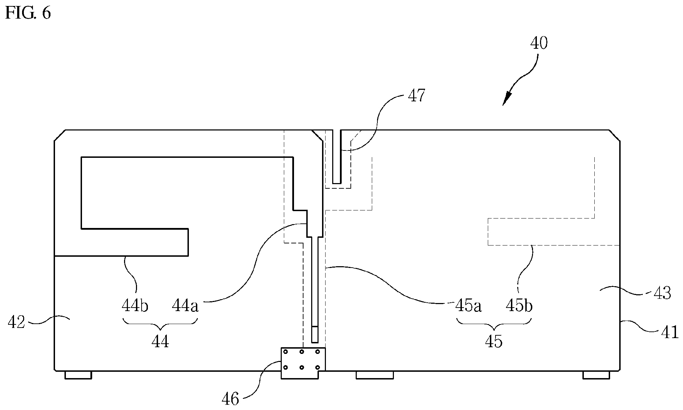

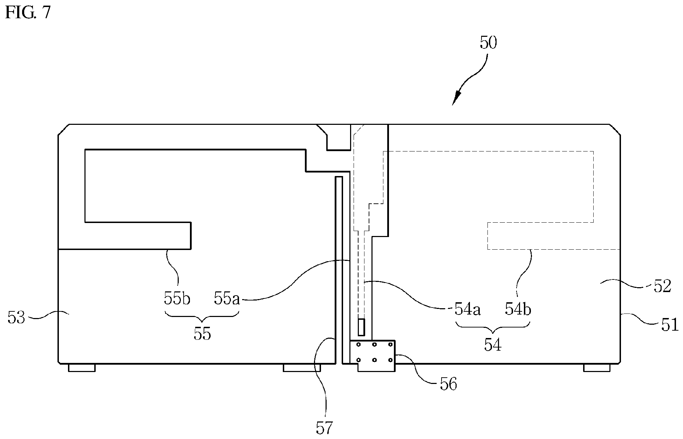

Hereinafter, the cross Yagi antenna 30 will be described in more detail with reference to FIGS. 4 to 7. FIG. 4 is a perspective view illustrating the cross Yagi antenna 30 of FIG. 2. FIG. 5 is a plan view illustrating the base substrate 60 of the cross Yagi antenna 30 of FIG. 4. FIG. 6 is a plan view illustrating the first Yagi antenna 40 of the cross Yagi antenna 30 of FIG. 4. FIG. 7 is a plan view illustrating the second Yagi antenna 50 of the cross Yagi antenna 30 of FIG. 4.

Referring to FIG. 4, as described above, the cross Yagi antenna 30 includes the base substrate 60, the first Yagi antenna 40, and the second Yagi antenna 50.

The base substrate 60 has the shape of a square plate. The first and second Yagi antennas 40 and 50 cross-coupled to each other are mounted on and fixed to the base substrate 60. The first and second Yagi antennas 40 and 50 may be mounted on and fixed to the base substrate 60 through a mechanical fastening agent, an adhesive material, soldering, or any other equivalent.

As shown in FIG. 5, the base substrate 60 has through-holes 61 and 63 formed at a central portion thereof. The first and second ports 80 and 90 are inserted into the through-holes 61 and 63 and electrically connected to the first and second Yagi antennas 40 and 50, respectively. The through-holes 61 and 63 includes a first through-hole 61 into which the first port 80 is inserted, and a second through-hole 63 into which the second port 90 is inserted.

In order to provide a positional freedom of the first and second Yagi antennas 40 and 50 mounted on the base substrate 60, the base substrate 60 may further have dummy through-holes formed at positions other than those of the through-holes 61 and 63. Therefore, even if the first and second Yagi antennas 40 and 50 are mounted on the base substrate 60 in any direction, it is possible to electrically connect the first and second ports 80 and 90 to the first and second Yagi antennas 40 and 50 through the first and second through-holes 61 and 63 or the dummy through-holes.

Although this embodiment employs the base substrate 60 on which the first and second Yagi antennas 40 and 50 are mounted, this is exemplary only. In an alternative embodiment, the cross Yagi antenna 30 may not include the base substrate 60. In this case, the first and second Yagi antennas 40 and 50 may be directly mounted on and fixed to the antenna case 70. In addition, the first and second ports 80 and 90 may be electrically connected directly to the first and second Yagi antennas 40 and 50.

As shown in FIG. 4, the first and second ports 80 and 90 may be implemented as coaxial cables. For example, the first port 80 may have a central conductor axis 81 and a ground plane 83 surrounding the central axis 81. Similarly, the second port 90 may have a central conductor axis 91 and a ground plane 93 surrounding the central axis 91.

The first and second Yagi antennas 40 and 50 are cross-coupled to each other. For example, the second Yagi antenna 50 may be fitted downward from an upper portion of the first Yagi antenna 40 through slots formed therein. This will be described below in detail.

As best shown in FIGS. 6 and 7, each of the first and second Yagi antennas 40 and 50 includes a printed circuit board (PCB) 41 or 51, antenna patterns 44 and 45 or 54 and 55, and a slot 47 or 57. Hereinafter, the first and second Yagi antennas 40 and 50 will be separately described.

Referring to FIG. 6, the first Yagi antenna 40 includes a first PCB 41, first antenna patterns 44 and 45, and a first slot 47. The first antenna patterns 44 and 45 include a first front antenna pattern 44 and a first rear antenna pattern 45. The first PCB 41 has a first front surface 42 and a first rear surface 43 opposite to the first front surface 42. The first front antenna pattern 44 is formed on the first front surface 42, and the first rear antenna pattern 45 is formed on the first rear surface 43. The first slot 47 is formed to a predetermined depth downward from an upper central portion of the first PCB 41. The first Yagi antenna 40 may further include a first ground pad 46.

The first PCB 41 may be implemented in the form of a rectangular plate having a relatively long horizontal length. The first PCB 41 may be a substrate made of an insulating plastic material.

The first front antenna pattern 44 is composed of a first front vertical line 44a and a first front radiation line 44b. The first front vertical line 44a is formed in a vertical direction from a lower central portion of the first PCB 41. The first front radiation line 44b is extended from an upper end of the first front vertical line 44a and forms a certain pattern. Similarly, the first rear antenna pattern 45 is composed of a first rear vertical line 45a and a first rear radiation line 45b. The first rear vertical line 45a is formed in a vertical direction from the lower central portion of the first PCB 41. The first rear radiation line 45b is extended from an upper end of the first rear vertical line 45a and forms a certain pattern.

The first front and rear vertical lines 44a and 45a may be overlapped with each other while being formed respectively on the first front and rear surfaces 42 and 43 with the first PCB 41 interposed therebetween.

The first front and rear radiation lines 44b and 45b may be formed in opposite directions to each other while being extended respectively from the first front and rear vertical lines 44a and 45a.

The first front and rear radiation lines 44b and 45b are disposed on both sides of the first slot 47 while being spaced apart from the first slot 47.

The first front vertical line 44a is electrically connected to the first central conductor axis 81 of the first port 80. The first rear vertical line 45a is electrically connected to the first ground plane 83 of the first port 80 via the first ground pad 46.

The first ground pad 46 is formed on the first front surface 42 and is disposed below and spaced apart from the first front vertical line 44a to which the first central conductor axis 81 of the first port 80 is connected. On the first rear surface 43 opposite to the first front surface 42 where the first ground pad 46 is formed, a lower end of the first rear vertical line 45a is positioned. The first ground pad 46 on the first front surface 42 is electrically connected to the first rear vertical line 45a on the first rear surface 43. For example, the first ground pad 46 is directly connected to the first rear vertical line 45a through a lower end of the first PCB 41 or connected to the first rear vertical line 45a through a via-hole formed in the first PCB 41.

As such, when the first port 80 is electrically connected to the first Yagi antenna 40, the first central conductor axis 81 of the first port 80 is electrically connected to the first front vertical line 44a, and the first ground plane 83 of the first port 80 is electrically connected to the first ground pad 46. In addition, the first ground pad 46 is connected to the first rear vertical line 45a.

Referring to FIG. 7, the second Yagi antenna 50 includes a second PCB 51, second antenna patterns 54 and 55, and a second slot 57. The second antenna patterns 54 and 55 include a second front antenna pattern 54 and a second rear antenna pattern 55. The second PCB 51 has a second front surface 52 and a second rear surface 53 opposite to the second front surface 52. The second front antenna pattern 54 is formed on the second front surface 52, and the second rear antenna pattern 55 is formed on the second rear surface 53. The second slot 57 is formed to a predetermined depth upward from a lower central portion of the second PCB 51. The second Yagi antenna 50 may further include a second ground pad 56.

When the first and second Yagi antennas 40 and 50 are cross-coupled to each other, the first and second slots 47 and 57 are used. Specifically, the second slot 57 of the second Yagi antenna 50 is inserted into the first slot 47 of the first Yagi antenna 40, so that the first Yagi antenna 40 and the second Yagi antenna 50 are cross-coupled to each other.

The second PCB 51 may be implemented in the form of a rectangular plate having a relatively long horizontal length. The second PCB 51 may be a substrate made of an insulating plastic material.

The second front antenna pattern 54 is composed of a second front vertical line 54a and a second front radiation line 54b. The second front vertical line 54a is formed in a vertical direction from a lower central portion of the second PCB 51. The second front radiation line 54b is extended from an upper end of the second front vertical line 54a and forms a certain pattern. Similarly, the second rear antenna pattern 55 is composed of a second rear vertical line 55a and a second rear radiation line 55b. The second rear vertical line 55a is formed in a vertical direction from the lower central portion of the second PCB 51. The second rear radiation line 55b is extended from an upper end of the second rear vertical line 55a and forms a certain pattern.

The second front and rear vertical lines 54a and 55a may be overlapped with each other while being formed respectively on the second front and rear surfaces 52 and 53 with the second PCB 51 interposed therebetween.

The second front and rear radiation lines 54b and 55b may be formed in opposite directions to each other while being extended respectively from the second front and rear vertical lines 54a and 55a.

The second front and rear radiation lines 54b and 55b are disposed on both sides of the second slot 57 while being spaced apart from the second slot 57.

The second front vertical line 54a is electrically connected to the second central conductor axis 91 of the second port 90. The second rear vertical line 55a is electrically connected to the second ground plane 93 of the second port 90 via the second ground pad 56.

The second ground pad 56 is formed on the second front surface 52 and is disposed below and spaced apart from the second front vertical line 54a to which the second central conductor axis 91 of the second port 90 is connected. On the second rear surface 53 opposite to the second front surface 52 where the second ground pad 56 is formed, a lower end of the second rear vertical line 55a is positioned. The second ground pad 56 on the second front surface 52 is electrically connected to the second rear vertical line 55a on the second rear surface 53. For example, the second ground pad 56 is directly connected to the second rear vertical line 55a through a lower end of the second PCB 51 or connected to the second rear vertical line 55a through a via-hole formed in the second PCB 51.

As such, when the second port 90 is electrically connected to the second Yagi antenna 50, the second central conductor axis 91 of the second port 90 is electrically connected to the second front vertical line 54a, and the second ground plane 93 of the second port 90 is electrically connected to the second ground pad 56. In addition, the second ground pad 56 is connected to the second rear vertical line 45a.

As described above, the portable RFID reader device 100 according to embodiments of the present disclosure includes the cross Yagi antenna 30 composed of the first and second Yagi antennas 40 and 50 disposed respectively at angles of ±45 degrees with respect to the horizontal plane, thus exhibiting good signal reading characteristics regardless of a relative positional relationship between the portable RFID reader device 100 and the RFID tag.

In addition, the cross Yagi antenna 30 according to embodiments of the present disclosure has a structure in which the first and second Yagi antennas 40 and 50 having the same shape are orthogonally coupled to and overlapped with each other at angles of ±45 degrees with respect to the horizontal plane, so that even if two antennas are used, the occupied size thereof is minimized.

In addition, the cross Yagi antenna 30 according to embodiments of the present disclosure outputs RF signals for reading the RFID tag with a time difference of several tens of milliseconds through the first and second ports 80 and 90 respectively connected to the first and second Yagi antennas 40 and 50, thereby exhibiting good signal reading characteristics even at any angle, i.e., in any relative positional relationship including parallel or orthogonal, between the RFID reader device 100 and the RFID tag.

While the present disclosure has been particularly shown and described with reference to an exemplary embodiment thereof, it will be understood by those skilled in the art that various changes in form and details may be made therein without departing from the scope of the present disclosure as defined by the appended claims.

## Claims

1. A portable radio frequency identification (RFID) reader device comprising:
a reader body implemented as a portable type having a handle, and communicating with an RFID tag in a non-contact manner; and
a cross Yagi antenna assembly connected to the reader body, and including a cross Yagi antenna transmitting and receiving an RF signal required for communication to and from the RFID tag in a non-contact manner,
wherein the cross Yagi antenna includes:
a plate-shaped first Yagi antenna disposed at an angle of -45 degrees with respect to a horizontal plane; and
a second Yagi antenna disposed at an angle of 45 degrees with respect to the horizontal plane and arranged orthogonally and cross-coupled to the first Yagi antenna.

2. The portable RFID reader device of claim 1, wherein the cross Yagi antenna further includes:
a base substrate on which the first and second Yagi antennas are mounted.

3. The portable RFID reader device of claim 2, wherein the cross Yagi antenna assembly further includes:
an antenna case that accommodates the cross Yagi antenna,
wherein the antenna case includes:
a first antenna case supporting the base substrate inserted therein; and
a second antenna case combined with the first antenna case, wherein the first and second Yagi antennas mounted on the base substrate are positioned in the second antenna case.

4. The portable RFID reader device of claim 3, wherein the first Yagi antenna includes:
a first printed circuit board (PCB) having a first front surface and a first rear surface opposite to the first front surface;
a first front antenna pattern formed on the first front surface;
a first rear antenna pattern formed on the first rear surface; and
a first slot formed to a predetermined depth downward from an upper central portion of the first PCB.

5. The portable RFID reader device of claim 4, wherein the second Yagi antenna includes:
a second PCB having a second front surface and a second rear surface opposite to the second front surface;
a second front antenna pattern formed on the second front surface;
a second rear antenna pattern formed on the second rear surface; and
a second slot formed to a predetermined depth upward from a lower central portion of the second PCB.

6. The portable RFID reader device of claim 5, wherein the second slot of the second Yagi antenna is inserted into the first slot of the first Yagi antenna, so that the first Yagi antenna and the second Yagi antenna are cross-coupled to each other.

7. The portable RFID reader device of claim 6, wherein the first and second Yagi antennas transmit and receive RF signals with a time difference through the first and second ports respectively connected thereto through the base substrate.

8. The portable RFID reader device of claim 7, wherein the first port includes:
a first central conductor axis connected to the first front antenna pattern through the base substrate; and
a first ground plane connected to the first rear antenna pattern through the base substrate.

9. The portable RFID reader device of claim 8, wherein the first front antenna pattern includes:
a first front vertical line formed in a vertical direction from a lower central portion of the first PCB; and
a first front radiation line extended from an upper end of the first front vertical line and forming a certain pattern,
wherein the first rear antenna pattern includes:
a first rear vertical line formed in a vertical direction from the lower central portion of the first PCB; and
a first rear radiation line extended from an upper end of the first rear vertical line and forming a certain pattern,
wherein the first front and rear vertical lines are overlapped with each other while being formed respectively on the first front and rear surfaces with the first PCB interposed therebetween,
wherein the first front and rear radiation lines are formed in opposite directions to each other while being extended respectively from the first front and rear vertical lines,
wherein the first front vertical line is electrically connected to the first central conductor axis of the first port, and
wherein the first rear vertical line is electrically connected to the first ground plane of the first port.

10. The portable RFID reader device of claim 9, wherein the second port includes:
a second central conductor axis connected to the second front antenna pattern through the base substrate; and
a second ground plane connected to the second rear antenna pattern through the base substrate.

11. The portable RFID reader device of claim 10, wherein the second front antenna pattern includes:
a second front vertical line formed in a vertical direction from a lower central portion of the second PCB; and
a second front radiation line extended from an upper end of the second front vertical line and forming a certain pattern,
wherein the second rear antenna pattern includes:
a second rear vertical line formed in a vertical direction from the lower central portion of the second PCB; and
a second rear radiation line extended from an upper end of the second rear vertical line and forming a certain pattern,
wherein the second front and rear vertical lines are overlapped with each other while being formed respectively on the second front and rear surfaces with the second PCB interposed therebetween,
wherein the second front and rear radiation lines are formed in opposite directions to each other while being extended respectively from the second front and rear vertical lines,
wherein the second front vertical line is electrically connected to the second central conductor axis of the second port, and
wherein the second rear vertical line is electrically connected to the second ground plane of the second port.
